# EUROPÄISCHE PATENTANMELDUNG

(11) **EP 0 849 667 A2**
(43) Veröffentlichungstag der Anmeldung: **24.06.1998**
(21) Anmeldenummer: 97203843.4
(22) Anmeldetag: 08.12.1997
(51) Int. Cl.: G06F 9/445

(54) **System zum Austausch von Software**

(30) Priorität: 18.12.1996 DE 19652629
(71) Anmelder: Philips Patentverwaltung GmbH, 22335 Hamburg (DE); Philips Electronics N.V., 5621 BA Eindhoven (NL)
(72) Erfinder: Zander, Wolfgang, Dipl.-Ing., Röntgenstrasse 24, 22335 Hamburg (DE)
(74) Vertreter: Volmer, Georg, Dipl.-Ing.

(57) **Zusammenfassung**

Die Erfindung bezieht sich auf ein System zum Austausch von Software mit einem Baustein (3), welcher eine Steuerschaltung (4) und eine Speicheranordnung (6) zur Speicherung von Software enthält, und mit einer Ladevorrichtung (1) zur Lieferung von Software an den Baustein (3), dessen Steuerschaltung (4) nach einer entsprechenden Anweisung zum Austausch von in der Speicheranordnung (6) enthaltenen Software vorgesehen ist. Die Software enthält eine Systemsoftware zumindest bestehend aus einer Betriebssystem-Software und Austauschsoftware und eine Anwendersoftware zur Steuerung wenigstens einer mit dem Baustein (3) gekoppelten Komponente. Ein erster Teil der Speicheranordnung (6) ist zur Speicherung der Systemsoftware und ein zweiter Teil der Speicheranordnung (6) zur Speicherung der Anwendersoftware vorgesehen. Während des Austausches von Systemsoftware ist die Steuerschaltung (4) zur Löschung des ersten Teils der Speicheranordnung (6) nach Speicherung der neuen Systemsoftware in den zweiten Teil der Speicheranordnung (6) und dann zur Übertragung der neuen Systemsoftware von dem zweiten in den ersten Teil der Speicheranordnung (6) vorgesehen.

## Beschreibung

Die Erfindung bezieht sich auf ein System zum Austausch von Software mit einem Baustein, welcher eine Steuerschaltung und eine Speicheranordnung zur Speicherung von Software enthält, und mit einer Ladevorrichtung zur Lieferung von Software an den Baustein, dessen Steuerschaltung nach einer entsprechenden Anweisung zum Austausch von in der Speicheranordnung enthaltenen Software vorgesehen ist.

Ein solches System ist aus der DE 43 33 272 A1 bekannt, welches ein mit einem Netzwerk gekoppeltes Endgerät und eine Wartungsvorrichtung enthält. Die Wartungsvorrichtung sendet über das Netzwerk eine neue Betriebs-Software für eine Steuerschaltung des Endgerätes, welche in dem Endgerät mittels einer in der Steuerschaltung enthaltenen Austausch-Steuereinheit ausgetauscht wird. Die Austausch-Steuereinheit benutzt für den Austauschvorgang eine Austausch-Software, die in einem Austauschspeicher abgelegt ist. Die Betriebs-Software ist in einem anderen Speicher, der Betriebsspeicher genannt wird, gespeichert. Bei diesem Kommunikationssystem ist für den Austauschvorgang ein separater Speicher (Austauschspeicher) und eine separate Steuereinheit (Austausch-Steuereinheit) notwendig.

Der Erfindung liegt die Aufgabe zugrunde, ein System zu schaffen, bei dem der Schaltungsaufwand zum Austausch von Software in einem Baustein geringer ist.

Die Aufgabe wird bei einem System der eingangs genannten Art dadurch gelöst, daß die Software eine Systemsoftware zumindest bestehend aus einer Betriebssystem-Software und Austauschsoftware und eine Anwendersoftware zur Steuerung wenigstens einer mit dem Baustein gekoppelten Komponente enthält,
daß ein erster Teil der Speicheranordnung zur Speicherung der Systemsoftware und ein zweiter Teil der Speicheranordnung zur Speicherung der Anwendersoftware vorgesehen ist und
daß während des Austausches von Systemsoftware die Steuerschaltung zur Löschung des ersten Teils der Speicheranordnung nach Speicherung der neuen Systemsoftware in den zweiten Teil der Speicheranordnung und dann zur Übertragung der neuen Systemsoftware von dem zweiten in den ersten Teil der Speicheranordnung vorgesehen ist.

Bei dem erfindungsgemäßen System führt die Steuerschaltung im Baustein den Austauschvorgang der in einer Speicheranordnung abgelegten Systemsoftware durch. Die Speicheranordnung kann aus mehreren nichtflüchtigen Speichern oder einem als Flash-EEPROM mit mehreren einzeln löschbaren und wiederbeschreibbaren Teilen ausgebildet sein. Das System könnte mehrere als Rechnerbausteine ausgebildete Bausteine für wenigstens ein videotechnisches Gerät enthalten, die über Netzwerkverbindungen (z.B. Thinwire-Ethernet) mit der als Personal-Computer ausgebildeten Ladevorrichtung gekoppelt sind. Ein videotechnisches Gerät wäre beispielsweise ein Filmabtaster, Mischer oder andere Studiogeräte.

Der Erfindung liegt die Idee zugrunde, die Software in zwei Teile aufzuspalten und diese in verschiedene Teile der Speicheranordnung abzulegen. Die Systemsoftware wird dabei so erneuert, daß die von der Ladevorrichtung empfangene neue Systemsoftware zuerst in den Teil der Speicheranordnung abgelegt wird, in welcher der andere Teil der Software, die Anwendersoftware gespeichert ist. Die Anwendersoftware wird dann durch die neue Systemsoftware überschrieben. Nach erfolgreicher Übertragung der neuen Systemsoftware wird dann die alte Systemsoftware gelöscht und die neue Systemsoftware in den ersten Teil der Speicheranordnung übertragen. Die Löschung der alten Systemsoftware und die Speicherung bzw. Programmierung der neuen Systemsoftware wird mit Hilfe eines Hilfsprogramms durchgeführt. Hierbei entnimmt die Steuerschaltung das Hilfsprogramm aus der Speicheranordnung und ruft dieses zur Ausführung des Lösch- und Programmiervorgangs auf.

Der Ladevorrichtung kann nach erfolgreicher Übertragung der neuen Systemsoftware eine entsprechende Meldung gesendet werden, damit diese anschließend eine Anwendersoftware liefern kann. Hierbei ist nach einer Anweisung zum Austausch von Anwendersoftware von der Ladevorrichtung die Steuerschaltung zur Löschung der alten Anwendersoftware und zur Programmierung der von der Ladevorrichtung gelieferten neuen Anwendersoftware vorgesehen.

Die Erfindung bezieht sich auch auf ein Verfahren zum Austausch von Software und auf einen Baustein in dem System zum Austausch von Software.

Ein Ausführungsbeispiel der Erfindung wird anhand der Fig. näher erläutert. Es zeigen:
- Fig. 1: ein schematisch dargestelltes System mit zwei Bausteinen, Netzwerkverbindungen und einer Ladevorrichtung und
- Fig. 2: ein Blockschaltbild eines Bausteins.

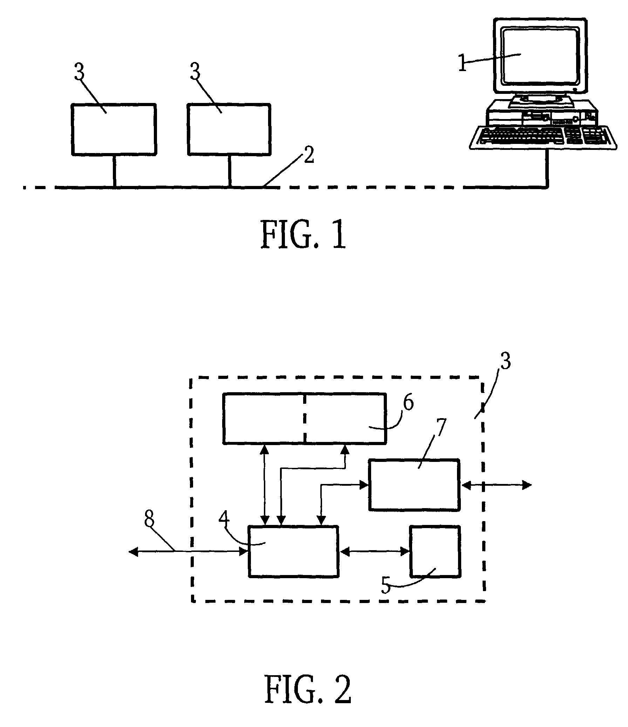

In Fig. 1 ist schematisch ein System zum Austausch von Software, die in nichtflüchtigen Speichern (Flash-EEPROM) abgelegt ist und zur Steuerung eines Filmabtasters dient, dargestellt. Eine neue Software wird beispielsweise von einer Ladevorrichtung 1, die z.B. ein Personal-Computer (PC) ist, über Netzwerkverbindungen 2 (z.B. Thinwire-Ethernet) an einen oder mehrere Rechnerbausteine 3 des Filmabtasters geliefert.

Ein solcher Rechnerbaustein 3, der zur Steuerung von Komponenten des Filmabtasters dient, kann den in Fig. 2 gezeigten Aufbau aufweisen. Dieser enthält eine Steuerschaltung 4, die beispielsweise als Mikroprozessor ausgebildet ist, einen Arbeitsspeicher 5 (RAM), einen nichtflüchtigen Speicher 6 und eine Netzwerkschnittstelle 7. Der nichtflüchtige Speicher 6 weist mindestens zwei Sektoren oder Teile auf, die jeweils einzeln löschbar und wiederbeschreibar sind. Mit den restlichen Komponenten des Filmabtasters kommuniziert die Steuerschaltung beispielsweise über ein Bussystem, welches durch eine Verbindung 8 in der Fig. 2 angedeutet ist. Die Netzwerkschnittstelle 7 tauscht Daten zwischen den Netzwerkverbindungen 2 und der Steuerschaltung 4 aus. Ferner weist der Steuerbaustein 3 noch Verbindungen zwischen der Steuerschaltung 4 und den jeweiligen Sektoren des Speichers 6 und dem Arbeitsspeicher 5 auf.

Die Software, welche in dem Speicher 6 enthalten ist, besteht aus zwei Teilen. Der erste Softwareteil wird Systemsoftware genannt und beinhaltet das Betriebssystem, Diagnosesoftware, Netzwerktreibersoftware, Lösch- und Programmiersoftware für die nichtflüchtigen Speicher (Flash-EEPROM) und die Software für den Austauschvorgang. Der zweite Softwareteil wird Anwendersoftware genannt und betrifft die Software für die jeweiligen Applikationen des Filmabtasters. Die Systemsoftware ist in einem ersten Teil des Speichers 6 und die Anwendersoftware in einem zweiten Teil des Speichers 6 gespeichert. Beide Teile des Speichers 6 sind jeweils löschbar und wiederbeschreibbar (unterschiedliche Adreßräume).

Die Steuerschaltung 4 lädt nach einem Systemstart zuerst die Systemsoftware und prüft anschließend, ob eine Anwendersoftware geladen ist. Wenn die Anwendersoftware im zweiten Teil des Speichers 6 geladen ist, wird sie aufgerufen, initialisiert und dann abgearbeitet. Im anderen Fall, wenn die Anwendersoftware nicht geladen ist, blockiert die Steuerschaltung 4 Aufrufe der Anwendersoftware. Die Steuerschaltung 4 läuft aufgrund der nicht geladenen Anwendersoftware in einem Modus ohne spezielle Steuerungsfunktionen, den die Systemsoftware vorgibt. Dieser Modus tritt beispielsweise nach Inbetriebnahme eines Rechnerbausteins auf, wenn die Systemsoftware zuvor z.B. mittels eines Programmierers (EEPROM-Programmer) in den ersten Teil des Speichers 6 geladen worden ist. Die Anwendersoftware kann dann mittels des Personal-Computers 1 über die Netzwerkverbindungen in den zweiten Teil des Speichers 6 geschrieben werden.

Der Lade- oder Austauschvorgang von Anwendersoftware, der von der Steuerschaltung 4 nach dem im ersten Teil des Speichers 6 enthaltenen Software für den Austauschvorgang durchgeführt wird, ist durch folgenden Ablauf gekennzeichnet:
1. Anweisung von Ladevorrichtung 1 zum Laden neuer Anwendersoftware;
2. Sperrung des Zugriffs auf alte Anwendersoftware;
3. Löschen der alten Anwendersoftware im Speicher 6;
4. Einen Datenblock der neuen Anwendersoftware in Arbeitsspeicher laden;
5. Datenblock aus Arbeitsspeicher 5 lesen, decodieren und in die entsprechenden Adressen des Speichers 6 programmieren;
6. Ist letzter Datenblock von Ladevorrichtung 1 empfangen worden?
   - Ja:: weiter bei Punkt 7;
   - Nein:: weiter bei Punkt 4;
7. Durchführen eines Neustartes.

Nachdem die Steuerschaltung 4 über die Netzwerkverbindungen 2 und die Netzwerkschnittstelle 7 die Anweisung von der Ladevorrichtung 1 empfangen hat, daß eine neue Anwendersoftware in den zweiten Teil des Speichers 6 geladen werden soll, werden alle Zugriffe auf die alte Anwendersoftware gesperrt. Das bedeutet, daß alle laufenden Anwenderprogramme beendet und keine Anwenderprogramme mehr aufgerufen werden können. Es wird anschließend die alte Anwendersoftware im zweiten Teil des Speichers 6 gelöscht (bestimmter Adreßraum im Flash-EEPROM wird gelöscht) - Nacheinander werden die Datenblöcke der neuen Anwendersoftware von der Steuerschaltung 4 empfangen, im Arbeitsspeicher 5 zwischengespeichert und nach Decodierung in die entsprechenden Adressen des Speichers 6 programmiert. Dies wird solange durchgeführt, bis alle Datenblöcke der neuen Anwendersoftware übertragen worden sind. Zum Schluß veranlaßt die Steuerschaltung 4 einen Neustart, wodurch die neue Anwendersoftware aktiv wird und die Steuerung von Komponenten des Filmabtasters übernimmt.

Der Lade- oder Austauschvorgang von Systemsoftware, der von der Steuerschaltung 4 nach dem im ersten Teil des Speichers 6 enthaltenen Software für den Austauschvorgang durchgeführt wird, ist durch folgenden Ablauf gekennzeichnet:
1. Anweisung von Ladevorrichtung 1 zum Laden neuer Systemsoftware;
2. Sperrung des Zugriffs auf alte Anwendersoftware;
3. Löschen der alten Anwendersoftware im Speicher 6;
4. Einen Datenblock der neuen Systemsoftware in Arbeitsspeicher laden;
5. Datenblock aus Arbeitsspeicher 5 lesen, decodieren und in die entsprechenden Adressen des zweiten Teils des Speichers 6 programmieren;
6. Ist letzter Datenblock von Ladevorrichtung 1 empfangen worden?
   - Ja:: weiter bei Punkt 7;
   - Nein:: weiter bei Punkt 4;
7. Hilfsprogramm aus dem zweiten Teil des Speichers 6 lesen und in Arbeitsspeicher 5 kopieren;
8. Aufrufen des Hilfsprogramms;
9. Löschen der alten Systemsoftware im ersten Teil des Speichers 6;
10. Kopieren der neuen Systemsoftware aus dem zweiten Teil in den ersten Teil des Speichers 6;
11. Löschen der Systemsoftware im zweiten Teil des Speichers 6;
12. Durchführen eines Neustarts;
13. Laden von neuer Anwendersoftware;

Wenn die Systemsoftware ausgetauscht werden soll, sendet die Ladevorrichtung 1 an einen Rechnerbaustein 3 eine Anweisung über die Netzwerkverbindungen 2. Nach Empfang der Anweisung sperrt die Steuerschaltung 4 alle Zugriffe auf die Anwendersoftware und löscht den zweiten Teil des Speichers 6. Wie bei dem Austauschvorgang der Anwendersoftware werden nacheinander Datenblöcke der neuen Systemsoftware von der Steuerschaltung 4 über die Netzwerkschnittstelle 7 empfangen, im Arbeitsspeicher 5 zwischengespeichert und nach Decodierung in die entsprechenden Adressen des zweiten Teils des Speichers 6 programmiert. Dieser Vorgang ist beendet, bis alle Datenblöcke der neuen Systemsoftware im zweiten Teil des Speichers 6 abgelegt worden sind. Nachdem die neue Systemsoftware komplett im zweiten Teil des Speichers 6 gespeichert ist, holt die Steuerschaltung 4 von der neuen Systemsoftware ein Hilfsprogramm, welches im Arbeitsspeicher 5 abgelegt wird. Nach dem Aufruf des Hilfsprogramms wird die alte Systemsoftware im ersten Teil des Speichers mit Hilfe des Hilfsprogramms gelöscht und die neue Software aus dem zweiten Teil in den ersten Teil des Speichers 6 ebenfalls mit Hilfe des Hilfsprogramms kopiert. Danach führt die Steuerschaltung 4 einen Neustart durch, wodurch die neue Systemsoftware aktiv wird. Da sich keine Anwendersoftware im zweiten Teil des Speichers 6 befindet, läuft die Steuerschaltung 4 in einem Modus ohne spezielle Steuerungsfünktionen. Erst wenn eine neue Anwendersoftware nach dem oben beschriebenen Ablauf von der Ladevorrichtung 1 geliefert worden ist, kann die Steuerschaltung 4 wieder die Steuerung von Komponenten des Filmabtasters übernehmen.

## Patentansprüche

1. System zum Austausch von Software mit einem Baustein (3), welcher eine Steuerschaltung (4) und eine Speicheranordnung (6) zur Speicherung von Software enthält, und mit einer Ladevorrichtung (1) zur Lieferung von Software an den Baustein (3), dessen Steuerschaltung (4) nach einer entsprechenden Anweisung zum Austausch von in der Speicheranordnung (6) enthaltenen Software vorgesehen ist,
dadurch gekennzeichnet,
daß die Software eine Systemsoftware zumindest bestehend aus einer Betriebssystem-Software und Austauschsoftware und eine Anwendersoftware zur Steuerung wenigstens einer mit dem Baustein (3) gekoppelten Komponente enthält,
daß ein erster Teil der Speicheranordnung (6) zur Speicherung der Systemsoftware und ein zweiter Teil der Speicheranordnung (6) zur Speicherung der Anwendersoftware vorgesehen ist und
daß während des Austausches von Systemsoftware die Steuerschaltung (4) zur Löschung des ersten Teils der Speicheranordnung (6) nach Speicherung der neuen Systemsoftware in den zweiten Teil der Speicheranordnung (6) und dann zur Übertragung der neuen Systemsoftware von dem zweiten in den ersten Teil der Speicheranordnung (6) vorgesehen ist.

2. System nach Anspruch 1,
dadurch gekennzeichnet,
daß nach Speicherung der neuen Systemsoftware die Steuerschaltung (4) zur Entnahme eines Hilfsprogramms aus der Speicheranordnung (6) zur Löschung der alten Systemsoftware und zur Programmierung der neuen Systemsoftware im ersten Teil der Speicheranordnung (6) vorgesehen ist.

3. System nach Anspruch 1 oder 2,
dadurch gekennzeichnet,
daß nach einer Anweisung zum Austausch von Anwendersoftware von der Ladevorrichtung (1) die Steuerschaltung (4) zur Löschung der alten Anwendersoftware und zur Programmierung der von der Ladevorrichtung (1) gelieferten neuen Anwendersoftware vorgesehen ist.

4. System nach einem der Ansprüche 1 bis 3,
dadurch gekennzeichnet,
daß die Speicheranordnung (6) als Flash-EEPROM mit mehrern einzeln löschbaren und wiederbeschreibbaren Teilen ausgebildet ist.

5. System nach einem der Ansprüche 1 bis 4,
dadurch gekennzeichnet,
daß das System mehrere als Rechnerbausteine (3) ausgebildete Bausteine für wenigstens ein videotechnisches Gerät enthält, die über Netzwerkverbindungen (2) mit der als Personal-Computer (1) ausgebildeten Ladevorrichtung gekoppelt sind.

6. Verfahren zum Austausch von Software mit einem Baustein (3), welcher eine Steuerschaltung (4) und eine Speicheranordnung (6) zur Speicherung von Software enthält, und mit einer Ladevorrichtung (1) zur Lieferung von Software an den Baustein (3), dessen Steuerschaltung (4) nach einer entsprechenden Anweisung zum Austausch von in der Speicheranordnung (6) enthaltenen Software vorgesehen ist,
dadurch gekennzeichnet,
daß die Software eine Systemsoftware zumindest bestehend aus einer Betriebssystem-Software und Austauschsoftware und eine Anwendersoftware zur Steuerung wenigstens einer mit dem Baustein (3) gekoppelten Komponente enthält,
daß im ersten Teil der Speicheranordnung (6) die Systemsoftware und im zweiten Teil der Speicheranordnung (6) die Anwendersoftware gespeichert wird und
daß während des Austauschvorgangs zuerst die neue Systemsoftware im zweiten Teil der Speicheranordnung (6) gespeichert, dann der erste Teil der Speicheranordnung (6) gelöscht und die neue Systemsoftware von dem zweiten in den ersten Teil der Speicheranordnung (6) übertragen wird.

7. Baustein in einem System zum Austausch von Software,
- welcher eine Steuerschaltung (4) und eine Speicheranordnung (6) zur Speicherung von Software enthält,
- welcher zum Empfang von Software von einer Ladevorrichtung (1) vorgesehen ist und
- dessen Steuerschaltung (4) nach einer entsprechenden Anweisung zum Austausch von in der Speicheranordnung (6) enthaltenen Software vorgesehen ist,
dadurch gekennzeichnet,
daß die Software eine Systemsoftware zumindest bestehend aus einer Betriebssystem-Software und Austauschsoftware und eine Anwendersoftware zur Steuerung wenigstens einer mit dem Baustein (3) gekoppelten Komponente enthält,
daß ein erster Teil der Speicheranordnung (6) zur Speicherung der Systemsoftware und ein zweiter Teil der Speicheranordnung (6) zur Speicherung der Anwendersoftware vorgesehen ist und
daß während des Austausches von Systemsoftware die Steuerschaltung (4) zur Löschung des ersten Teils der Speicheranordnung (6) nach Speicherung der neuen Systemsoftware in den zweiten Teil der Speicheranordnung (6) und dann zur Übertragung der neuen Systemsoftware von dem zweiten in den ersten Teil der Speicheranordnung (6) vorgesehen ist.
